# FASCICULE DE BREVET EUROPEEN

(11) **EP 3 545 600 B1**
(45) Date de publication et mention de la délivrance du brevet: **31.03.2021**
(21) Numéro de dépôt: 17817777.0
(22) Date de dépôt: 23.11.2017
(51) Int. Cl.: H02J 3/26, H02J 3/32

(54) **PROCÉDÉ D'ÉQUILIBRAGE DE PHASES D'UN COURANT TRIPHASÉ, ET DISPOSITIF D'ÉQUILIBRAGE POUR LA MISE EN OEUVRE DUDIT PROCÉDÉ**
VERFAHREN ZUM PHASENAUSGLEICH EINES DREIPHASENSTROMS, UND AUSGLEICHSVORRICHTUNG ZUR IMPLEMENTIERUNG DES VERFAHRENS
METHOD FOR PHASE BALANCING OF A THREE-PHASE CURRENT, AND APPARATUS FOR IMPLEMENTING THE METHOD

(30) Priorité: 28.11.2016 FR 1661594
(43) Date de publication de la demande: 02.10.2019
(73) Titulaire: Hager-Electro SAS, 67210 Obernai (FR)
(72) Inventeur: KALISCHECK, Nicolas, 67210 Bernardswiller (FR)
(74) Mandataire: Cabinet Nuss
(86) Numéro de dépôt international: PCT/FR2017/053220
(87) Numéro de publication internationale: WO 2018/096273

(56) Documents cités:
- EP-A1- 2 597 745
- EP-A1- 2 919 352
- DE-A1- 4 216 946
- FR-A1- 2 391 584
- JP-A- H09 128 072
- US-A1- 2015 084 423

## Description

La présente invention concerne le domaine de la distribution d'énergie électrique et de la réinjection d'énergie électrique d'un réseau domestique vers un réseau de distribution, et plus particulièrement un procédé d'équilibrage de phases d'un courant triphasé.

En règle générale, un réseau de distribution permet de fournir un courant triphasé à un réseau domestique pouvant ensuite être consommé par au moins un consommateur installé dans ce réseau domestique. A l'inverse, il est également possible au sein du réseau domestique qu'un courant triphasé soit produit, en particulier, lorsque qu'au moins un dispositif de production d'énergie y est installé, tel qu'un ou plusieurs panneau(x) solaire(s). Dans ce cas, du courant triphasé en provenance du réseau domestique peut être injecté dans le réseau de distribution. Ce courant triphasé est véhiculé dans une ligne électrique comprenant trois conducteurs de phase. Or, lorsque le courant est issu du réseau domestique puis est injecté dans le réseau de distribution et/ou lorsque le courant est consommé par le consommateur dans le réseau domestique, il est fréquent que la valeur du courant ne soit pas la même sur l'ensemble des phases, notamment lorsqu'un dispositif de production y est installé et que le courant généré est par la suite réinjecté sur une seule des phases et/ou lorsque le courant consommé par le consommateur est déséquilibré sur les phases. Il en résulte la création de déséquilibres au niveau des phases pouvant, d'une part, entraîner une surcharge au niveau de l'une des phases et, d'autre part, entraîner des déséquilibres au niveau du poste de transformation du réseau de distribution pouvant entraîner sa dégradation, voire sa destruction du fait d'une surchauffe. De tels déséquilibres sont donc à la fois gênants pour le consommateur et pour le fournisseur d'électricité.

Les documents DE 42 16 946 A1, FR 2 391 584 A1, JP H09 128072 A illustrent l'arrière-plan technologique.

La présente invention a pour but de proposer une solution pour équilibrer les phases d'un courant triphasé, permettant de surmonter au moins les limitations principales de l'état de la technique indiquées ci-dessus.

A cet effet, l'invention concerne un procédé d'équilibrage de phases d'un courant de consommation triphasé prélevé depuis un réseau de distribution et consommé par au moins un consommateur installé dans un réseau domestique ou d'un courant d'injection triphasé injecté dans le réseau de distribution et produit par au moins un dispositif de production d'énergie installé dans le réseau domestique, ledit courant de consommation et/ou ledit courant d'injection véhiculant dans une ligne électrique comprenant au moins trois conducteurs de phase, le procédé d'équilibrage étant mis en œuvre à l'aide d'un dispositif d'équilibrage de phase comprenant un premier convertisseur AC/DC et un deuxième convertisseur DC/AC reliés par leur bornes de courant continu, ledit dispositif d'équilibrage de phase comprenant en outre une unité de commande et au moins trois capteurs de mesure de courant, chacun desdits capteurs de mesure de courant étant reliés à l'unité de commande et à l'un parmi les au moins trois conducteurs de phase, chacun desdits capteurs de mesure de courant étant apte à mesurer l'intensité du courant de consommation ou du courant d'injection dans l'un desdits au moins trois conducteurs de phase, procédé caractérisé en ce qu'il comprend les étapes successives suivantes :
I. pour chacune des phases, mesurer à l'aide des capteurs de mesure de courant l'intensité de courant du courant de consommation ou du courant d'injection,
II. déterminer à l'aide de l'unité de commande, pour chacun des conducteurs de phase, la puissance du courant de consommation ou du courant d'injection,
III. déterminer à l'aide de l'unité de commande la somme des puissances du courant de consommation ou du courant d'injection des trois phases,
IV. diviser à l'aide de l'unité de commande la somme des puissances par trois afin d'obtenir une puissance moyenne,
V. déterminer à l'aide de l'unité de commande pour chacune des phases une différence de puissance en soustrayant la puissance moyenne de la puissance du courant de consommation ou du courant d'injection respective,
VI. au cas où chacune desdites différences de puissance se situe dans un intervalle de tolérance prédéterminé, réitérer ledit procédé depuis l'étape I.;
VII. au cas où au moins l'une desdites différences de puissance se situe hors l'intervalle de tolérance,
VIII. au cas où un courant d'injection triphasé est injecté dans le réseau de distribution :
   a) pour la ou les phases dont la différence est positive, prélever du conducteur de phase respectif un courant différentiel dont la puissance correspond à ladite différence à l'aide du premier convertisseur AC/DC et transformer ledit courant différentiel à l'aide du premier convertisseur AC/DC en un premier courant continu ;
   b) au cas où une seule parmi lesdites différences est négative, transformer le premier courant continu en courant alternatif à l'aide du deuxième convertisseur DC/AC et appliquer ce courant alternatif au conducteur de phase dont ladite différence est négative ;
   c) au cas où deux parmi lesdites différences sont négatives, nommées première différence négative et deuxième différence négative,
      i. déterminer à l'aide de l'unité de commande une différence négative totale en additionnant la première différence négative à la deuxième différence négative,
      ii. diviser à l'aide de l'unité de commande la première différence négative par la différence négative totale pour obtenir un premier taux d'application,
      iii. diviser à l'aide de l'unité de commande la deuxième différence négative par la différence négative totale pour obtenir un deuxième taux d'application,
      iv. transformer une première part du premier courant continu correspondant au premier taux d'application en un courant alternatif à l'aide du deuxième convertisseur DC/AC et appliquer celui-ci au conducteur de phase correspondant à la première différence négative ;
      v. transformer une deuxième part du premier courant continu correspondant au deuxième taux d'application en un courant alternatif à l'aide du deuxième convertisseur DC/AC et appliquer celui-ci au conducteur de phase correspondant à la deuxième différence négative
IX. au cas où un courant de consommation triphasé est prélevé depuis le réseau de distribution :
   a') pour la ou les phases dont la différence est négative, prélever du conducteur de phase respectif un courant différentiel dont la puissance correspond à ladite différence à l'aide du premier convertisseur AC/DC et transformer ledit courant différentiel à l'aide du premier convertisseur AC/DC en un premier courant continu ;
   b') au cas où une seule parmi lesdites différences est positive, transformer le premier courant continu en courant alternatif à l'aide du deuxième convertisseur DC/AC et appliquer ce courant alternatif au conducteur de phase, dont ladite différence est positive ;
   c') au cas où deux parmi lesdites différences sont positives, nommées première différence positive et deuxième différence positive,
      i'. déterminer à l'aide de l'unité de commande une différence positive totale en additionnant la première différence positive à la deuxième différence positive,
      ii'. diviser à l'aide de l'unité de commande la première différence positive par la différence positive totale pour obtenir un premier taux d'application,
      iii'. diviser à l'aide de l'unité de commande la deuxième différence positive par la différence positive totale pour obtenir un deuxième taux d'application,
      iv'. transformer une première part du premier courant continu correspondant au premier taux d'application en un courant alternatif à l'aide du deuxième convertisseur DC/AC et appliquer celui-ci au conducteur de phase correspondant, à la première différence positive ;
      v'. transformer une deuxième part du premier courant continu correspondant au deuxième taux d'application en un courant alternatif à l'aide du deuxième convertisseur DC/AC et appliquer celui-ci au conducteur de phase, correspondant à la deuxième différence positive.

L'invention concerne également une unité de commande pour un dispositif d'équilibrage de phase comprenant un premier convertisseur AC/DC et un deuxième convertisseur DC/AC reliés par leur bornes de courant continu, ledit dispositif d'équilibrage de phase comprenant en outre au moins trois capteurs de mesure de courant, chacun desdits capteurs de mesure de courant étant aptes à être reliés à l'unité de commande et étant reliés à un parmi au moins trois conducteurs de phase, chacun desdits capteurs de mesure de courant étant aptes à mesurer l'intensité de courant du courant de consommation ou du courant d'injection dans l'un des au moins trois conducteurs de phase, caractérisé en ce que l'unité de commande est apte pour la mise en œuvre du procédé tel que décrit précédemment.

Enfin, l'invention concerne également un dispositif d'équilibrage d'un courant alternatif triphasé pour la mise en œuvre du procédé tel que décrit précédemment, comprenant un premier convertisseur AC/DC et un deuxième convertisseur DC/AC reliés par leur bornes de courant continu, ledit dispositif d'équilibrage de phase comprenant en outre une unité de commande tel que décrit précédemment et au moins trois capteurs de mesure de courant, chacun desdits capteurs de mesure de courant étant reliés à l'unité de commande et étant aptes à être reliés à un parmi au moins trois conducteurs de phase, chacun desdits capteurs de mesure de courant étant apte à mesurer l'intensité de courant du courant de consommation ou du courant d'injection véhiculant dans un parmi les trois conducteurs de phase.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
la figure 1 est une vue schématique d'un réseau de distribution et d'un réseau domestique associé à un dispositif d'équilibrage de phase selon l'invention,
la figure 2 est une vue schématique d'un convertisseur de courant, et,
la figure 3 est une vue schématique d'un sous-ensemble du convertisseur de la figure 2.

L'invention concerne un procédé d'équilibrage de phases d'un courant de consommation triphasé prélevé depuis un réseau de distribution et consommé par au moins un consommateur installé dans un réseau domestique 1 ou d'un courant d'injection triphasé injecté dans le réseau de distribution et produit par au moins un dispositif de production d'énergie installé dans le réseau domestique 1, ledit courant de consommation et/ou ledit courant d'injection véhiculant dans une ligne électrique 2 comprenant au moins trois conducteurs de phase 2a, 2b, 2c, le procédé d'équilibrage étant mis en œuvre à l'aide d'un dispositif d'équilibrage de phase comprenant un premier convertisseur AC/DC 5 et un deuxième convertisseur DC/AC 6 reliés par leur bornes de courant continu 8, 9. Le dispositif d'équilibrage de phase comprend en outre une unité de commande 10 et au moins trois capteurs de mesure de courant 11, 12, 13, chacun desdits capteurs de mesure de courant 11, 12, 13 étant reliés à l'unité de commande 10 et à l'un parmi les au moins trois conducteurs de phase 2a, 2b, 2c, chacun desdits capteurs de mesure de courant 11, 12, 13 étant apte à mesurer l'intensité de courant du courant de consommation I1a, I1b, I1c ou du courant d'injection I2a, I2b, I2c dans l'un desdits au moins trois conducteurs de phase 2a, 2b, 2c.

Un dispositif de production d'énergie peut à titre d'exemple non limitatif consister en un ou plusieurs panneau(x) photovoltaïque(s).

On entend par réseau domestique une ou plusieurs habitation(s), logement(s) ou locaux.

On entend par consommateur un ou plusieurs appareil(s) électrique(s) qui consomme(nt) de l'énergie électrique.

A titre d'exemple non limitatif, un capteur de courant peut comprendre un tore de mesure traversée par un conducteur dont le courant doit être mesuré et autour duquel est enroulée une bobine.

La ligne électrique 2 comprend au moins trois conducteurs de phase 2a, 2b, 2c. Elle peut également comprendre un conducteur de neutre 2d.

Conformément à l'invention, le procédé est caractérisé en ce qu'il comprend les étapes successives suivantes :
I. pour chacune des phases 2a, 2b, 2c, mesurer à l'aide des capteurs de mesure de courant 11, 12, 13, l'intensité de courant du courant de consommation I1a, I1b, I1c ou du courant d'injection I2a, I2b, I2c ,
II. déterminer à l'aide de l'unité de commande 10, pour chacun des conducteurs de phase 2a, 2b, 2c, la puissance du courant de consommation P1a, P1b, P1c ou du courant d'injection P2A, P2B, P2C,
III. déterminer à l'aide de l'unité de commande la somme des puissances du courant de consommation P1a, P1b, P1c ou du courant d'injection P2a, P2b, P2c des trois phases 2a, 2b, 2c,
IV. diviser à l'aide de l'unité de commande 10 la somme des puissances P1a, P1b, P1c; P2a, P2b, P2c par trois afin d'obtenir une puissance moyenne,
V. déterminer à l'aide de l'unité de commande 10 pour chacune des phases 2a, 2b, 2c une différence de puissance en soustrayant la puissance moyenne de la puissance du courant de consommation P1a, P1b, P1c ou du courant d'injection P2a, P2b, P2c respective,
VI. au cas où chacune desdites différences de puissance se situe dans un intervalle de tolérance prédéterminé, réitérer ledit procédé depuis l'étape I.;
VII. au cas où au moins l'une desdites différences de puissance se situe hors de l'intervalle de tolérance,
VIII. au cas où un courant d'injection triphasé est injecté dans le réseau de distribution :
   a) pour la ou les phases dont la différence est positive, prélever du conducteur de phase 2a, 2b, 2c, respectif un courant différentiel dont la puissance correspond à ladite différence à l'aide du premier convertisseur AC/DC 5 et transformer ledit courant différentiel à l'aide du premier convertisseur AC/DC 5 en un premier courant continu ;
   b) au cas où une seule parmi lesdites différences est négative, transformer le premier courant continu en courant alternatif à l'aide du deuxième convertisseur DC/AC 6 et appliquer ce courant alternatif au conducteur de phase 2a, 2b, 2c, dont ladite différence est négative ;
   c) au cas où deux parmi lesdites différences sont négatives, nommées première différence négative et deuxième différence négative,
      i. déterminer à l'aide de l'unité de commande 10 une différence négative totale en additionnant la première différence négative à la deuxième différence négative,
      ii. diviser à l'aide de l'unité de commande 10 la première différence négative par la différence négative totale pour obtenir un premier taux d'application,
      iii. diviser à l'aide de l'unité de commande la deuxième différence négative par la différence négative totale pour obtenir un deuxième taux d'application,
      iv. transformer une première part du premier courant continu correspondant au premier taux d'application en un courant alternatif à l'aide du deuxième convertisseur DC/AC 6 et appliquer celui-ci au conducteur de phase correspondant 2a, 2b, 2c, à la première différence négative ;
      v. transformer une deuxième part du premier courant continu correspondant au deuxième taux d'application en un courant alternatif à l'aide du deuxième convertisseur DC/AC 6 et appliquer celui-ci au conducteur de phase 2a, 2b, 2c, correspondant à la deuxième différence négative,
IX. au cas où un courant de consommation triphasé est prélevé depuis le réseau de distribution :
   a') pour la ou les phases dont la différence est négative, prélever du conducteur de phase 2a, 2b, 2c, respectif un courant différentiel dont la puissance correspond à ladite différence à l'aide du premier convertisseur AC/DC 5 et transformer ledit courant différentiel à l'aide du premier convertisseur AC/DC 5 en un premier courant continu ;
   b') au cas où une seule parmi lesdites différences est positive, transformer le premier courant continu en courant alternatif à l'aide du deuxième convertisseur DC/AC 6 et appliquer ce courant alternatif au conducteur de phase 2a, 2b, 2c, dont ladite différence est positive ;
   c') au cas où deux parmi lesdites différences sont positives, nommées première différence positive et deuxième différence positive,
      i'. déterminer à l'aide de l'unité de commande 10 une différence positive totale en additionnant la première différence positive à la deuxième différence positive,
      ii'. diviser à l'aide de l'unité de commande 10 la première différence positive par la différence positive totale pour obtenir un premier taux d'application,
      iii'. diviser à l'aide de l'unité de commande la deuxième différence positive par la différence positive totale pour obtenir un deuxième taux d'application,
      iv'. transformer une première part du premier courant continu correspondant au premier taux d'application en un courant alternatif à l'aide du deuxième convertisseur DC/AC 6 et appliquer celui-ci au conducteur de phase correspondant 2a, 2b, 2c, à la première différence positive ;
      v'. transformer une deuxième part du premier courant continu correspondant au deuxième taux d'application en un courant alternatif à l'aide du deuxième convertisseur DC/AC 6 et appliquer celui-ci au conducteur de phase 2a, 2b, 2c, correspondant à la deuxième différence positive.

Avantageusement, lorsqu'un déséquilibre apparaît au niveau des conducteurs de phase 2a, 2b, 2c du courant de consommation ou du courant d'injection, ce procédé d'équilibrage permet de répartir l'intensité de courant de consommation I1a, I1b, I1c ou du courant d'injection I2a, I2b, I2c, sur les trois conducteurs de phase 2a, 2b, 2c pour que les intensités du courant soient sensiblement égales sur les trois conducteurs de phase 2a, 2b, 2c. Il en résulte que les risques de surcharge d'un des conducteurs de phase 2a, 2b, 2c peuvent être évités, ainsi que les risques de surchauffe du transformateur du réseau de distribution.

Selon une variante de réalisation de l'invention, le réseau domestique 1 peut comprendre en outre un moyen de stockage d'énergie 14 relié aux bornes de courant continu 8 du premier convertisseur AC/DC 5 et aux bornes de courant continu 9 du deuxième convertisseur DC/AC 6.

Dans ce cas, le procédé est en outre caractérisé en ce qu'il comprend, avant l'étape I. en outre les étapes successives suivantes :
A) pour chacun des conducteurs de phase 2a, 2b, 2c, mesurer à l'aide des capteurs de mesure de courant 11, 12, 13, l'intensité de courant du courant de consommation I1a, I1b, I1c ou du courant d'injection I2a, I2b, I2c ;
B) déterminer à l'aide de l'unité de commande 10, pour chacun des conducteurs de phase 2a, 2b, 2c, la puissance du courant de consommation P1a, P1b, P1c ou du courant d'injection P2a, P2b, P2c,
C) déterminer à l'aide de l'unité de commande 10 la somme des puissances du courant de consommation P1a, P1b, P1c ou du courant d'injection P2a, P2b, P2c des trois phases 2a, 2b, 2c,
D) diviser à l'aide de l'unité de commande la somme des puissances P1a, P1b, P1c; P2a, P2b, P2c par trois afin d'obtenir une puissance moyenne,
E) déterminer à l'aide de l'unité de commande 10 pour chacune des phases 2a, 2b, 2c, une différence de puissance en soustrayant la puissance moyenne de la puissance du courant de consommation P1a, P1b, P1c ou du courant d'injection P2a, P2b, P2c respective,
F) au cas où au moins l'une desdites différences de puissance se situe hors de l'intervalle de tolérance, au cas où un courant de consommation triphasé est prélevé depuis le réseau de distribution et au cas où un état de charge du moyen de stockage 14 est inférieur à 100 %,
   F') pour la ou les phases 2a, 2b, 2c, dont la différence est négative, prélever du conducteur de phase 2a, 2b, 2c, respectif un courant différentiel dont la puissance correspond à ladite différence à l'aide du premier convertisseur AC/DC 5,
   F") transformer ledit courant différentiel à l'aide du premier convertisseur AC/DC 5 en un premier courant continu et ;
   F'") alimenter le moyen de stockage 14 en énergie afin de le charger, et/ou
G) au cas où au moins l'une desdites différences de puissance se situe hors de l'intervalle de tolérance, au cas où un courant de consommation triphasé est prélevé depuis le réseau de distribution et au cas où un état de charge du moyen de stockage 14 est supérieur à 0,
   G') pour le ou les conducteurs de phase 2a, 2b, 2c, dont la différence est positive, prélever du moyen de stockage 14 un deuxième courant continu dont la puissance correspond à ladite différence,
   G") appliquer au conducteur de phase 2a, 2b, 2c, respectif un courant différentiel obtenu en convertissant le deuxième courant continu à l'aide du deuxième convertisseur DC/AC 6 et/ou
H) au cas où au moins l'une desdites différences de puissance se situe hors de l'intervalle de tolérance, au cas où un courant d'injection triphasé est injecté dans le réseau de distribution, et au cas où un état de charge du moyen de stockage 14 est inférieur à 100 % :
   H') pour la ou les phases 2a, 2b, 2c dont la différence est positive, prélever du conducteur de phase 2a, 2b, 2c respectif un courant différentiel dont la puissance correspond à ladite différence à l'aide du premier convertisseur AC/DC 5,
   H") transformer ledit courant différentiel à l'aide du premier convertisseur AC/DC 5 en un premier courant continu et ;
   H'") alimenter le moyen de stockage 14 en énergie afin de le charger, et/ou
J) au cas où au moins l'une desdites différences de puissance se situe hors de l'intervalle de tolérance, au cas où un courant d'injection triphasé est injecté dans le réseau de distribution, et au cas où un état de charge du moyen de stockage 14 est supérieur à 0 :
   J') pour le ou les conducteurs de phase 2a, 2b, 2c dont la différence est négative, prélever du moyen de stockage 14 un deuxième courant continu dont la puissance correspond à ladite différence,
   J") appliquer au conducteur de phase 2a, 2b, 2c respectif un courant différentiel obtenu en convertissant le deuxième courant continu à l'aide du deuxième convertisseur DC/AC.

Avantageusement, l'utilisation d'un moyen de stockage 14 au sein du réseau domestique permet de stocker de l'énergie électrique issue d'un déséquilibre apparu sur un des conducteurs de phase 2a, 2b, 2c. En particulier, un tel déséquilibre peut intervenir lorsqu'un des conducteurs de phase 2a, 2b, 2c est traversé par un courant plus élevé que les autres conducteurs de phase 2a, 2b, 2c, par exemple, lorsque de l'électricité est produite par le dispositif de production d'énergie et en particulier lorsque l'électricité est produite par le dispositif de production d'énergie n'est injecté que sur l'un des trois conducteurs de phase 2a, 2b, 2c. Une partie du courant produit peut ainsi être réinjectée dans le réseau sous la forme d'un courant triphasé équilibré et une autre partie du courant peut être stockée dans le moyen de stockage 14. Un déséquilibre peut également intervenir lorsqu'un des conducteurs de phase 2a, 2b, 2c est traversé par un courant plus faible que les autres conducteurs de phase 2a, 2b, 2c, par exemple, lorsque de l'électricité est également consommée par un consommateur d'énergie. Une partie du courant stockée dans le moyen de stockage 14 peut alors être prélevée puis réinjectée sur ce conducteur de phase 2a, 2b, 2c pour que le courant triphasé soit équilibré.

Le moyen de stockage 14 peut par exemple consister en une batterie.

Selon une variante de réalisation de l'invention alternative, le réseau domestique 1 peut comprendre en outre un moyen de stockage 14 d'énergie relié aux bornes de courant continu 8 du premier convertisseur AC/DC 5 et aux bornes de courant continu 9 du deuxième convertisseur DC/AC 6. Dans ce cas le procédé est caractérisé en ce qu'il comprend, avant l'étape I. en outre les étapes successives suivantes :
A1) pour chacun des conducteurs de phase 2a, 2b, 2c, mesurer à l'aide des capteurs de mesure de courant 11, 12, 13 l'intensité de courant du courant de consommation I1a, I1b, I1c ou du courant d'injection I2a, I2b, I2c ;
B1) déterminer à l'aide de l'unité de commande 10, pour chacun des conducteurs de phase 2a, 2b, 2c, la puissance du courant de consommation P1a, P1b, P1c ou du courant d'injection P2A, P2B, P2C,
C1) déterminer à l'aide de l'unité de commande 10 la somme des puissances du courant de consommation P1a, P1b, P1c ou du courant d'injection P2a, P2b, P2c des trois phases 2a, 2b, 2c,
D1) diviser à l'aide de l'unité de commande 10 la somme des puissances P1a, P1b, P1c; P2a, P2b, P2c par trois afin d'obtenir une puissance moyenne,
E1) déterminer à l'aide de l'unité de commande 10 pour chacune des phases 2a, 2b, 2c, une différence de puissance en soustrayant la puissance moyenne de la puissance du courant de consommation P1a, P1b, P1c ou du courant d'injection P2a, P2b, P2c respective,
F1) au cas où au moins l'une desdites différences de puissance se situe hors de l'intervalle de tolérance, au cas où un courant de consommation triphasé est prélevé depuis le réseau de distribution et au cas où un état de charge du moyen de stockage 14 est inférieur à 100 %,
   F1') pour la phase 2a, 2b, 2c, dont la puissance du courant de consommation P1a, P1b, P1c est la plus faible, prélever du conducteur de phase 2a, 2b, 2c, respectif un courant différentiel dont la puissance correspond à ladite différence de puissance de la phase respective à l'aide du premier convertisseur AC/DC,
   F1") transformer ledit courant différentiel à l'aide du premier convertisseur AC/DC 5 en un premier courant continu et ;
   F1'") alimenter le moyen de stockage 14 en énergie afin de le charger, et/ou
G1) au cas où au moins l'une desdites différences de puissance se situe hors de l'intervalle de tolérance, au cas où un courant de consommation triphasé est prélevé depuis le réseau de distribution et au cas où un état de charge du moyen de stockage 14 est supérieur à 0,
   G1') pour le ou les conducteurs de phase 2a, 2b, 2c, dont la puissance du courant de consommation ou du courant d'injection est la plus élevée, prélever du moyen de stockage 14 un deuxième courant continu dont la puissance correspond à ladite différence de puissance,
   G1") appliquer au conducteur de phase 2a, 2b, 2c, respectif un courant différentiel obtenu en convertissant le deuxième courant continu à l'aide du deuxième convertisseur DC/AC 6 et/ou
H1) au cas où au moins l'une desdites différences de puissance se situe hors de l'intervalle de tolérance, au cas où un courant d'injection triphasé est injecté dans le réseau de distribution, et au cas où un état de charge du moyen de stockage 14 est inférieur à 100 % :
   H1') pour la phase 2a, 2b, 2c dont la puissance du courant d'injection P2a, P2b, P2c est la plus élevée, prélever du conducteur de phase 2a, 2b, 2c respectif un courant différentiel dont la puissance correspond à ladite différence de puissance de la phase 2a, 2b, 2c respective à l'aide du premier convertisseur AC/DC 5,
   H1") transformer ledit courant différentiel à l'aide du premier convertisseur AC/DC 5 en un premier courant continu et ;
   H1'") alimenter le moyen de stockage 14 en énergie afin de le charger, et/ou
J1) au cas où au moins l'une desdites différences de puissance se situe hors l'intervalle de tolérance, au cas où un courant d'injection triphasé est injecté dans le réseau de distribution, et au cas où un état de charge du moyen de stockage 14 est supérieur à 0,
J1') pour le ou les conducteurs de phase 2a, 2b, 2c dont la puissance du courant d'injection P2a, P2b, P2c est la plus faible, prélever du moyen de stockage 14 un deuxième courant continu dont la puissance correspond à ladite différence de puissance,
J1") appliquer au conducteur de phase 2a, 2b, 2c respectif un courant différentiel obtenu en convertissant le deuxième courant continu à l'aide du deuxième convertisseur DC/AC.

Dans chacune de ces variantes de réalisation, l'intervalle de tolérance peut comprendre les valeurs se trouvant entre une première valeur correspondant à la puissance moyenne multipliée par -0,1 et une deuxième valeur correspondant à la puissance moyenne multipliée par 0,1.

Dans chacune de ces variantes de réalisation, dans l'étape II. et/ou dans l'étape B) et/ou dans l'étape B1), la puissance du courant de consommation P1a, P1b, P1c ou du courant d'injection P2a, P2b, P2c pour chaque phase 2a, 2b, 2c, peut être déterminée en multipliant, à l'aide de l'unité de commande 10, l'intensité de courant du courant de consommation I1a, I1b, I1c ou du courant d'injection I2a, I2b, I2c obtenue dans l'étape I. par la tension nominale du réseau de distribution et/ou du réseau domestique 1.

Avantageusement, il est possible de fournir une valeur approximative de la puissance du courant de consommation P1a, P1b, P1c ou du courant d'injection P2a, P2b, P2c. A titre d'exemple non limitatif, dans un réseau de distribution la tension nominale est sensiblement comprise entre 380 Volts et 400 Volts.

De manière alternative, le dispositif d'équilibrage de phase peut comprendre en outre au moins trois capteurs de mesure de tension, chacun desdits capteurs de mesure de tension étant reliés à l'unité de commande 10 et à l'un parmi les au moins trois conducteurs de phase 2a, 2b, 2c, chacun desdits capteurs de mesure de tension étant apte à mesurer une tension du courant de consommation V1a, V1b, V1c ou du courant d'injection V2a, V2b, V2c pour l'une des trois conducteurs de phase 2a, 2b, 2c.

Dans ce cas le procédé est caractérisé en ce que, dans l'étape II. et/ou dans l'étape B) et/ou dans l'étape B1), la puissance du courant de consommation P1a, P1b, P1c ou du courant d'injection P2a, P2b, P2c pour chaque conducteur de phase 2a, 2b, 2c, est déterminée en mesurant à l'aide des capteurs de mesure tension la tension du courant de consommation V1a, V1b, V1c ou du courant d'injection V2a, V2b, V2c pour chacune des conducteurs de phase 2a, 2b, 2c, et en multipliant respectivement celles-ci, pour chaque conducteur de phase 2a, 2b, 2c, avec l'intensité de courant de consommation I1a, I1b, I1c ou du courant d'injection I2a, I2b, I2c obtenue dans l'étape I.

Avantageusement, dans ce cas la puissance du courant de consommation P1a, P1b, P1c ou du courant d'injection P2a, P2b, P2c correspond à une valeur mesurée par les capteurs de courant 11, 12, 13 et les capteurs de tension et est plus précise.

L'invention concerne également une unité de commande 10 pour un dispositif d'équilibrage de phase. Ce dispositif d'équilibrage de phase comprend un premier convertisseur AC/DC 5 et un deuxième convertisseur DC/AC 6 reliés par leur bornes de courant continu 8, 9, et en outre au moins trois capteurs de mesure de courant 11, 12, 13, chacun desdits capteurs de mesure de courant 11, 12, 13, étant aptes à être reliés à l'unité de commande 10 et étant reliés à un parmi au moins trois conducteurs de phase 2a, 2b, 2c, chacun desdits capteurs de mesure de courant 11, 12, 13, étant apte à mesurer l'intensité de courant du courant de consommation I1a, I1b, I1c ou du courant d'injection I2a, I2b, I2c dans l'un des au moins trois conducteurs de phase 2a, 2b, 2c.

Conformément à l'invention, l'unité de commande 10 est caractérisée en ce qu'elle est apte pour la mise en œuvre du procédé tel que décrit précédemment.

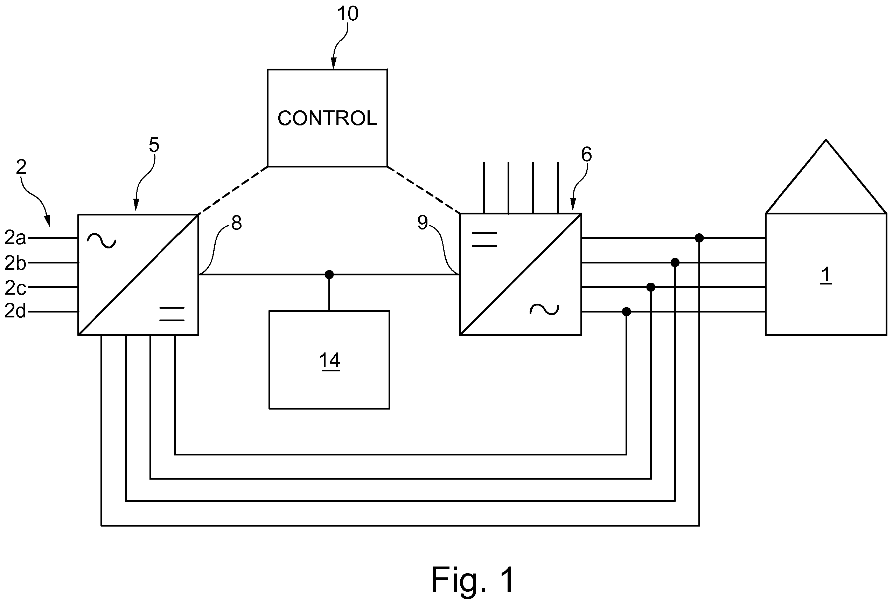

L'unité de commande 10 peut être une entité séparée du premier convertisseur AC/DC 5 et du deuxième convertisseur DC/AC 6, comme l'illustre la figure 1 ou être intégrée au sein du premier convertisseur AC/DC 5 et/ou du deuxième convertisseur DC/AC 6.

Un dispositif d'équilibrage d'un courant alternatif triphasé pour la mise en œuvre du procédé tel que décrit précédemment peut comprendre un premier convertisseur AC/DC 5 et un deuxième convertisseur DC/AC 6 reliés par leur bornes de courant continu 8, 9 (figure 1). Ce dispositif d'équilibrage de phase peut en outre comprendre une unité de commande 10 telle que décrite précédemment et au moins trois capteurs de mesure de courant 11, 12, 13, chacun desdits capteurs de mesure de courant 11, 12, 13 étant relié à l'unité de commande 10 et étant apte à être relié à un parmi au moins trois conducteurs de phase 2a, 2b, 2c, chacun desdits capteurs de mesure de courant 11, 12, 13 étant apte à mesurer l'intensité de courant du courant de consommation I1a, I1b, I1c ou du courant d'injection I2a, I2b, I2c véhiculant dans un parmi les trois conducteurs de phase 2a, 2b, 2c.

Selon une variante de réalisation de l'invention, le dispositif d'équilibrage peut comprendre en outre au moins trois capteurs de mesure de tension, chacun desdits capteurs de mesure de tension étant relié à l'unité de commande 10 et étant apte à être relié à l'un parmi les au moins trois conducteurs de phase 2a, 2b, 2c, et étant apte à mesurer une tension du courant de consommation ou du courant d'injection véhiculant dans l'un parmi les trois conducteurs de phases 2a, 2b, 2c, ledit dispositif d'équilibrage étant apte pour la mise en œuvre du procédé tel que décrit précédemment.

Comme l'illustre la figure 1, le premier convertisseur AC/DC 5 et le deuxième convertisseur DC/AC 6 peuvent être reliés par leur bornes de courant continu 8, 9 en tête-bêche.

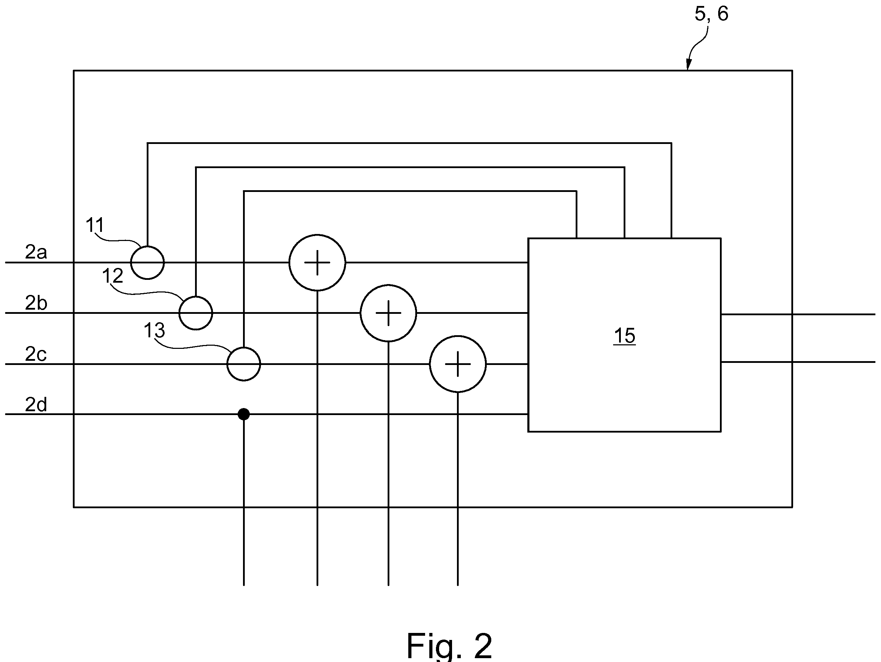

En référence à la figure 2, le premier convertisseur AC/DC 5 et le deuxième convertisseur DC/AC 6 peuvent intégrer trois capteurs de mesure de courant 11, 12, 13, chacun desdits capteurs de mesure de courant 11, 12, étant relié à un parmi au moins trois conducteurs de phase 2a, 2b, 2c. En outre, le premier convertisseur AC/DC 5 et le deuxième convertisseur DC/AC 6 peuvent intégrer au moins une unité de conversion 15 AC/DC ou DC/AC.

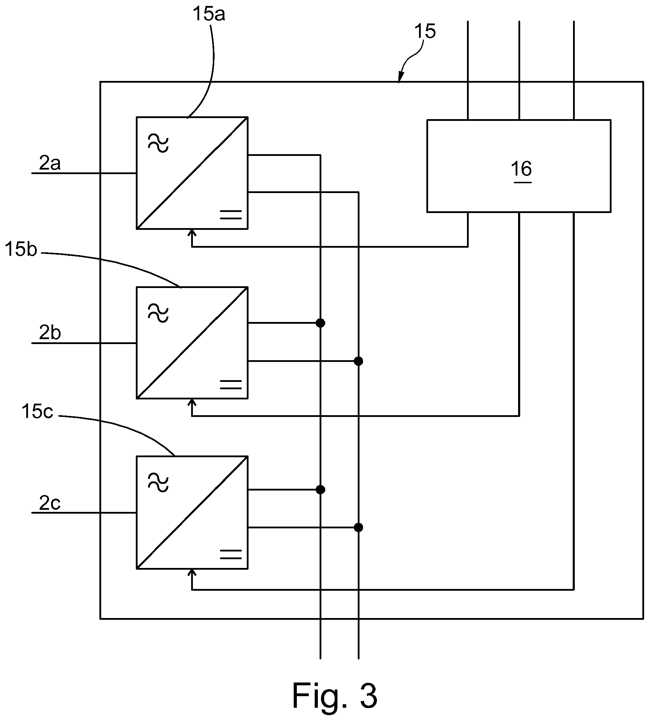

Comme illustré à la figure 3, l'unité de conversion 15 peut comprendre trois modules de conversion 15a, 15b, 15c pour chacun des conducteurs de phases 2a, 2b, 2c et une sous-unité de contrôle 16.

De préférence, le réseau domestique 1 peut être relié au deuxième convertisseur DC/AC 6 et le réseau de distribution peut être relié au premier convertisseur AC/DC 5.

Lorsque le réseau domestique 1 comprend en outre un moyen de stockage 14 d'énergie, ce dernier peut être relié aux bornes de courant continu 8 du premier convertisseur AC/DC 5 et aux bornes de courant continu 9 du deuxième convertisseur DC/AC 6, comme l'illustre la figure 1.

Bien entendu, l'invention n'est pas limitée aux modes de réalisations décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications annexées.

## Revendications

1. Procédé d'équilibrage de phases d'un courant de consommation triphasé prélevé depuis un réseau de distribution et consommé par au moins un consommateur installé dans un réseau domestique (1) ou d'un courant d'injection triphasé injecté dans le réseau de distribution et produit par au moins un dispositif de production d'énergie installé dans le réseau domestique (1), ledit courant de consommation et/ou ledit courant d'injection véhiculant dans une ligne électrique (2) comprenant au moins trois conducteurs de phase (2a, 2b, 2c), le procédé d'équilibrage étant mis en œuvre à l'aide d'un dispositif d'équilibrage de phase comprenant un premier convertisseur AC/DC (5) et un deuxième convertisseur DC/AC (6) reliés par leur bornes de courant continu (8, 9), ledit dispositif d'équilibrage de phase comprenant en outre une unité de commande (10) et au moins trois capteurs de mesure de courant (11, 12, 13), chacun desdits capteurs de mesure de courant étant reliés à l'unité de commande (10) et à l'un parmi les au moins trois conducteurs de phase (2a, 2b, 2c), chacun desdits capteurs de mesure de courant (11, 12, 13) étant apte à mesurer l'intensité de courant du courant de consommation (I1a, I1b, I1c) ou du courant d'injection (I2a, I2b, I2c) dans l'un desdits au moins trois conducteurs de phase (2a, 2b, 2c), procédé **caractérisé en ce qu'**il comprend les étapes successives suivantes :
I. pour chacune des phases (2a, 2b, 2c), mesurer à l'aide des capteurs de mesure de courant (11, 12, 13) l'intensité de courant du courant de consommation (I1a, I1b, I1c) ou du courant d'injection (I2a, I2b, I2c),
II. déterminer à l'aide de l'unité de commande (10), pour chacun des conducteurs de phase (2a, 2b, 2c), la puissance du courant de consommation (P1a, P1b, P1c) ou du courant d'injection (P2a, P2b, P2c),
III. déterminer à l'aide de l'unité de commande (10) la somme des puissances (P1a, P1b, P1c; P2a, P2b, P2c) du courant de consommation ou du courant d'injection des trois phases (2a, 2b, 2c),
IV. diviser à l'aide de l'unité de commande (10) la somme des puissances (P1a, P1b, P1c; P2a, P2b, P2c) par trois afin d'obtenir une puissance moyenne,
V. déterminer à l'aide de l'unité de commande (10) pour chacune des phases (2a, 2b, 2c) une différence de puissance en soustrayant la puissance moyenne de la puissance du courant de consommation (P1a, P1b, P1c) ou du courant d'injection (P2a, P2b, P2c) respective,
VI. au cas où chacune desdites différences de puissance se situe dans un intervalle de tolérance prédéterminé, réitérer ledit procédé depuis l'étape I.;
VII. au cas où au moins l'une desdites différences de puissance se situe hors l'intervalle de tolérance,
VIII. au cas où un courant d'injection triphasé est injecté dans le réseau de distribution :
a) pour la ou les phases (2a, 2b, 2c) dont la différence est positive, prélever du conducteur de phase (2a, 2b, 2c) respectif un courant différentiel dont la puissance correspond à ladite différence à l'aide du premier convertisseur AC/DC et transformer ledit courant différentiel à l'aide du premier convertisseur AC/DC (5) en un premier courant continu ;
b) au cas où une seule parmi lesdites différences est négative, transformer le premier courant continu en courant alternatif à l'aide du deuxième convertisseur DC/AC (6) et appliquer ce courant alternatif au conducteur de phase (2a, 2b, 2c) dont ladite différence est négative ;
c) au cas où deux parmi lesdites différences sont négatives, nommées première différence négative et deuxième différence négative,
i. déterminer à l'aide de l'unité de commande (10) une différence négative totale en additionnant la première différence négative à la deuxième différence négative,
ii. diviser à l'aide de l'unité de commande (10) la première différence négative par la différence négative totale pour obtenir un premier taux d'application,
iii. diviser à l'aide de l'unité de commande (10) la deuxième différence négative par la différence négative totale pour obtenir un deuxième taux d'application,
iv. transformer une première part du premier courant continu correspondant au premier taux d'application en un courant alternatif à l'aide du deuxième convertisseur DC/AC (6) et appliquer celui-ci au conducteur de phase (2a, 2b, 2c) correspondant à la première différence négative ;
v. transformer une deuxième part du premier courant continu correspondant au deuxième taux d'application en un courant alternatif à l'aide du deuxième convertisseur DC/AC (6) et appliquer celui-ci au conducteur de phase (2a, 2b, 2c) correspondant à la deuxième différence négative,
IX. au cas où un courant de consommation triphasé est prélevé depuis le réseau de distribution :
a') pour la ou les phases dont la différence est négative, prélever du conducteur de phase (2a, 2b, 2c), respectif un courant différentiel dont la puissance correspond à ladite différence à l'aide du premier convertisseur AC/DC (5) et transformer ledit courant différentiel à l'aide du premier convertisseur AC/DC (5) en un premier courant continu ;
b') au cas où une seule parmi lesdites différences est positive, transformer le premier courant continu en courant alternatif à l'aide du deuxième convertisseur DC/AC (6) et appliquer ce courant alternatif au conducteur de phase (2a, 2b, 2c), dont ladite différence est positive ;
c') au cas où deux parmi lesdites différences sont positives, nommées première différence positive et deuxième différence positive,
i'. déterminer à l'aide de l'unité de commande (10) une différence positive totale en additionnant la première différence positive à la deuxième différence positive,
ii'. diviser à l'aide de l'unité de commande (10) la première différence positive par la différence positive totale pour obtenir un premier taux d'application,
iii'. diviser à l'aide de l'unité de commande la deuxième différence positive par la différence positive totale pour obtenir un deuxième taux d'application,
iv'. transformer une première part du premier courant continu correspondant au premier taux d'application en un courant alternatif à l'aide du deuxième convertisseur DC/AC (6) et appliquer celui-ci au conducteur de phase correspondant (2a, 2b, 2c), à la première différence positive ;
v'. transformer une deuxième part du premier courant continu correspondant au deuxième taux d'application en un courant alternatif à l'aide du deuxième convertisseur DC/AC (6) et appliquer celui-ci au conducteur de phase (2a, 2b, 2c), correspondant à la deuxième différence positive.

2. Procédé d'équilibrage selon la revendication 1, **caractérisé en ce que** le réseau domestique (1) comprend en outre un moyen de stockage (14) d'énergie relié aux bornes de courant continu (8) du premier convertisseur AC/DC (5) et aux bornes de courant continu (9) du deuxième convertisseur DC/AC (6), procédé **caractérisé en ce qu'**il comprend, avant l'étape I. en outre les étapes successives suivantes :
A) pour chacun des conducteurs de phase, mesurer à l'aide des capteurs de mesure de courant (11, 12, 13) l'intensité de courant du courant de consommation (I1a, I1b, I1c) ou du courant d'injection (I2a, I2b, I2c) ;
B) déterminer à l'aide de l'unité de commande (10), pour chacun des conducteurs de phase, la puissance du courant de consommation ou du courant d'injection
C) déterminer à l'aide de l'unité de commande (10) la somme des puissances (P1a, P1b, P1c; P2a, P2b, P2c) du courant de consommation ou du courant d'injection des trois phases (2a, 2b, 2c),
D) diviser à l'aide de l'unité de commande (10) la somme des puissances (P1a, P1b, P1c; P2a, P2b, P2c) par trois afin d'obtenir une puissance moyenne,
E) déterminer à l'aide de l'unité de commande (10) pour chacune des phases (2a, 2b, 2c) une différence de puissance en soustrayant la puissance moyenne de la puissance du courant de consommation (P1a, P1b, P1c) ou du courant d'injection (P2a, P2b, P2c) respective,
F) au cas où au moins l'une desdites différences de puissance se situe hors de l'intervalle de tolérance, au cas où un courant de consommation triphasé est prélevé depuis le réseau de distribution et au cas où un état de charge du moyen de stockage (14) est inférieur à 100 % :
F') pour la ou les phases (2a, 2b, 2c) dont la différence est négative, prélever du conducteur de phase (2a, 2b, 2c) respectif un courant différentiel dont la puissance correspond à ladite différence à l'aide du premier convertisseur AC/DC (5),
F") transformer ledit courant différentiel à l'aide du premier convertisseur AC/DC (5) en un premier courant continu et ;
F'") alimenter le moyen de stockage (14) en énergie afin de le charger, et/ou
G) au cas où au moins l'une desdites différences de puissance se situe hors l'intervalle de tolérance, au cas où un courant de consommation triphasé est prélevé depuis le réseau de distribution et au cas où un état de charge du moyen de stockage (14) est supérieur à 0 :
G') pour le ou les conducteurs de phase (2a, 2b, 2c) dont la différence est positive, prélever du moyen de stockage (14) un deuxième courant continu dont la puissance correspond à ladite différence,
G") appliquer au conducteur de phase (2a, 2b, 2c) respectif un courant différentiel obtenu en convertissant le deuxième courant continu à l'aide du deuxième convertisseur DC/AC et/ou
H) au cas où au moins l'une desdites différences de puissance se situe hors de l'intervalle de tolérance, au cas où un courant d'injection triphasé est injecté dans le réseau de distribution, et au cas où un état de charge du moyen de stockage (14) est inférieur à 100 % :
H') pour la ou les phases (2a, 2b, 2c) dont la différence est positive, prélever du conducteur de phase (2a, 2b, 2c) respectif un courant différentiel dont la puissance correspond à ladite différence à l'aide du premier convertisseur AC/DC (5),
H") transformer ledit courant différentiel à l'aide du premier convertisseur AC/DC (5) en un premier courant continu et ;
H'") alimenter le moyen de stockage (14) en énergie afin de le charger, et/ou
J) au cas où au moins l'une desdites différences de puissance se situe hors de l'intervalle de tolérance, au cas où un courant d'injection triphasé est injecté dans le réseau de distribution, et au cas où un état de charge du moyen de stockage (14) est supérieur à 0 :
J') pour le ou les conducteurs de phase (2a, 2b, 2c) dont la différence est négative, prélever du moyen de stockage (14) un deuxième courant continu dont la puissance correspond à ladite différence,
J") appliquer au conducteur de phase (2a, 2b, 2c) respectif un courant différentiel obtenu en convertissant le deuxième courant continu à l'aide du deuxième convertisseur DC/AC.

3. Procédé d'équilibrage selon la revendication 1, **caractérisé en ce que** le réseau domestique (1) comprend en outre un moyen de stockage (14) d'énergie relié aux bornes de courant continu (8) du premier convertisseur AC/DC (5) et aux bornes de courant continu (9) du deuxième convertisseur DC/AC (6), procédé **caractérisé en ce qu'**il comprend, avant l'étape I. en outre les étapes successives suivantes :
A1) pour chacun des conducteurs de phase (2a, 2b, 2c), mesurer à l'aide des capteurs de mesure de courant (11, 12, 13) l'intensité de courant du courant de consommation (I1a, I1b, I1c) ou du courant d'injection (I2a, I2b, I2c) ;
B1) déterminer à l'aide de l'unité de commande (10), pour chacun des conducteurs de phase (2a, 2b, 2c), la puissance du courant de consommation (P1a, P1b, P1c) ou du courant d'injection (P2a, P2b, P2c)
C1) déterminer à l'aide de l'unité de commande (10) la somme des puissances (P1a, P1b, P1c; P2a, P2b, P2c) du courant de consommation ou du courant d'injection des trois phases (2a, 2b, 2c),
D1) diviser à l'aide de l'unité de commande (10) la somme des puissances (P1a, P1b, P1c; P2a, P2b, P2c) par trois afin d'obtenir une puissance moyenne,
E1) déterminer à l'aide de l'unité de commande (10) pour chacune des phases (2a, 2b, 2c) une différence de puissance en soustrayant la puissance moyenne de la puissance du courant de consommation (P1a, P1b, P1c) ou du courant d'injection (P2a, P2b, P2c) respective,
F1) au cas où au moins l'une desdites différences de puissance se situe hors l'intervalle de tolérance, au cas où un courant de consommation triphasé est prélevé depuis le réseau de distribution et au cas où un état de charge du moyen de stockage (14) est inférieur à 100 %,
F1') pour la phase (2a, 2b, 2c) dont la puissance du courant de consommation (P1a, P1b, P1c) est la plus faible, prélever du conducteur de phase (2a, 2b, 2c) respectif un courant différentiel dont la puissance correspond à ladite différence de puissance de la phase (2a, 2b, 2c) respective à l'aide du premier convertisseur AC/DC (5),
F1") transformer ledit courant différentiel à l'aide du premier convertisseur AC/DC (5) en un premier courant continu et ;
F1'") alimenter le moyen de stockage (14) en énergie afin de le charger, et/ou
G1) au cas où au moins l'une desdites différences de puissance se situe hors l'intervalle de tolérance, au cas où un courant de consommation triphasé est prélevé depuis le réseau de distribution et au cas où un état de charge du moyen de stockage (14) est supérieur à 0,
G1') pour le ou les conducteurs de phase (2a, 2b, 2c) dont la puissance du courant de consommation (P1a, P1b, P1c) est la plus élevée, prélever du moyen de stockage (14) un deuxième courant continu dont la puissance correspond à ladite différence de puissance,
G1") appliquer au conducteur de phase (2a, 2b, 2c) respectif un courant différentiel obtenu en convertissant le deuxième courant continu à l'aide du deuxième convertisseur DC/AC et/ou
H1) au cas où au moins l'une desdites différences de puissance se situe hors de l'intervalle de tolérance, au cas où un courant d'injection triphasé est injecté dans le réseau de distribution et au cas où un état de charge du moyen de stockage (14) est inférieur à 100 %,
H1') pour la phase (2a, 2b, 2c) dont la puissance du courant d'injection (P2a, P2b, P2c) est la plus élevée, prélever du conducteur de phase (2a, 2b, 2c) respectif un courant différentiel dont la puissance correspond à ladite différence de puissance de la phase (2a, 2b, 2c) respective à l'aide du premier convertisseur AC/DC (5),
H1") transformer ledit courant différentiel à l'aide du premier convertisseur AC/DC (5) en un premier courant continu et ;
H1'") alimenter le moyen de stockage (14) en énergie afin de le charger, et/ou
J1) au cas où au moins l'une desdites différences de puissance se situe hors de l'intervalle de tolérance, au cas où un courant d'injection triphasé est injecté dans le réseau de distribution et au cas où un état de charge du moyen de stockage (14) est supérieur à 0,
J1') pour le ou les conducteurs de phase (2a, 2b, 2c) dont la puissance du courant d'injection (P2a, P2b, P2c) est la plus faible, prélever du moyen de stockage (14) un deuxième courant continu dont la puissance correspond à ladite différence de puissance,
J1") appliquer au conducteur de phase (2a, 2b, 2c) respectif un courant différentiel obtenu en convertissant le deuxième courant continu à l'aide du deuxième convertisseur DC/AC.

4. Procédé d'équilibrage selon l'une quelconque des revendications 1 à 3, **caractérisé en ce que** l'intervalle de tolérance comprend les valeurs se trouvant entre une première valeur correspondant à la puissance moyenne multipliée par -0,1 et une deuxième valeur correspondant à la puissance moyenne multipliée par 0,1.

5. Procédé d'équilibrage selon l'une quelconque des revendications 2 ou 3, **caractérisé en ce que**, dans l'étape II. et/ou dans l'étape B) et/ou dans l'étape B1), la puissance du courant de consommation (P1a, P1b, P1c) ou du courant d'injection (P2a, P2b, P2c) pour chaque phase (2a, 2b, 2c) est déterminée en multipliant, à l'aide de l'unité de commande (10), l'intensité de courant du courant de consommation (I1a, I1b, I1c) ou du courant d'injection (I2a, I2b, I2c) obtenue dans l'étape I. par la tension nominale du réseau de distribution et/ou du réseau domestique.

6. Procédé d'équilibrage selon l'une quelconque des revendications 2 ou 3, **caractérisé en ce que** dispositif d'équilibrage de phase comprend en outre au moins trois capteurs de mesure de tension, chacun desdits capteurs de mesure de tension étant relié à l'unité de commande (10) et à l'un parmi les au moins trois conducteurs de phase (2a, 2b, 2c), chacun desdits capteurs de mesure de tension étant apte à mesurer une tension du courant de consommation ou du courant d'injection pour l'un des trois conducteurs de phase, procédé **caractérisé en ce que**, dans l'étape II. et/ou dans l'étape B) et/ou dans l'étape B1), la puissance du courant de consommation (P1a, P1b, P1c) ou du courant d'injection (P2a, P2b, P2c) pour chaque conducteur de phase (2a, 2b, 2c) est déterminée en mesurant à l'aide des capteurs de mesure tension la tension du courant de consommation ou du courant d'injection pour chacun des conducteurs de phase (2a, 2b, 2c) et en multipliant respectivement celles-ci, pour chaque conducteur de phase, avec l'intensité de courant du courant de consommation (I1a, I1b, I1c) ou du courant d'injection (I2a, I2b, I2c) obtenue dans l'étape I.

7. Dispositif d'équilibrage d'un courant alternatif triphasé pour la mise en œuvre du procédé selon l'une quelconque des revendications 1 à 6, comprenant un premier convertisseur AC/DC (5) et un deuxième convertisseur DC/AC (6) reliés par leurs bornes de courant continu (8, 9), ledit dispositif d'équilibrage de phase comprenant en outre une unité de commande (10) et au moins trois capteurs de mesure de courant (11, 12, 13), chacun desdits capteurs de mesure de courant (11, 12, 13) étant relié à l'unité de commande (10) et étant apte à être relié à un parmi au moins trois conducteurs de phase (2a, 2b, 2c), chacun desdits capteurs de mesure de courant (11, 12, 13) étant apte à mesurer l'intensité de courant de consommation ou du courant d'injection véhiculant dans un parmi les trois conducteurs de phase.

8. Dispositif d'équilibrage selon la revendication 7, **caractérisé en ce qu'**il comprend en outre au moins trois capteurs de mesure de tension, chacun desdits capteurs de mesure de tension étant relié à l'unité de commande (10) et étant apte à être relié à l'un parmi les au moins trois conducteurs de phase (2a, 2b, 2c) et étant aptes à mesurer une tension du courant de consommation ou du courant d'injection véhiculant dans l'un parmi les trois conducteurs de phases (2a, 2b, 2c), ledit dispositif d'équilibrage étant apte pour la mise en œuvre du procédé selon l'une quelconque des revendications 3 à 6.

## Patentansprüche

1. Verfahren zur Symmetrierung von Phasen eines dreiphasigen Verbrauchsstroms, der aus einem Verteilnetz entnommen wird und von mindestens einem in einem Haushaltsnetz (1) installierten Verbraucher verbraucht wird, oder eines dreiphasigen Einspeisestroms, der in das Verteilnetz eingespeist wird und von mindestens einer im Haushaltsnetz (1) installierten Energieerzeugungsvorrichtung erzeugt wird, wobei der Verbrauchsstrom und/oder der Einspeisestrom in einer Stromleitung (2) übertragen wird, die mindestens drei Phasenleiter (2a, 2b, 2c) umfasst, wobei das Symmetrierungsverfahren mithilfe einer Phasensymmetrierungsvorrichtung ausgeführt wird, die einen ersten AC/DC-Umrichter (5) und einen zweiten DC/AC-Umrichter (6) umfasst, die über ihre Gleichstromklemmen (8, 9) verbunden sind, wobei die Phasensymmetrierungsvorrichtung ferner eine Steuerungseinheit (10) und mindestens drei Strommessfühler (11, 12, 13) umfasst, wobei jeder der Strommessfühler mit der Steuerungseinheit (10) und mit einem unter den mindestens drei Phasenleitern (2a, 2b, 2c) verbunden ist, wobei jeder der Strommessfühler (11, 12, 13) geeignet ist, die Stromstärke des Verbrauchsstroms (I1a, I1b, I1c) oder des Einspeisestroms (I2a, I2b, I2c) in einem der mindestens drei Phasenleiter (2a, 2b, 2c) zu messen, wobei das Verfahren **dadurch gekennzeichnet ist, dass** es die folgenden aufeinander folgenden Schritte umfasst:
I. für jede der Phasen (2a, 2b, 2c) Messen der Stromstärke des Verbrauchsstroms (I1a, I1b, I1c) oder des Einspeisestroms (I2a, I2b, I2c) mithilfe der Strommessfühler (11, 12, 13),
II. Bestimmen der Leistung des Verbrauchsstroms (P1a, P1b, P1c) oder des Einspeisestroms (P2a, P2b, P2c) für jeden der Phasenleiter (2a, 2b, 2c) mithilfe der Steuerungseinheit (10),
III. Bestimmen der Summe der Leistungen (P1a, P1b, P1c; P2a, P2b, P2c) des Verbrauchsstroms oder des Einspeisestroms der drei Phasen (2a, 2b, 2c) mithilfe der Steuerungseinheit (10),
IV. Dividieren der Summe der Leistungen (P1a, P1b, P1c; P2a, P2b, P2c) mithilfe der Steuerungseinheit (10) durch drei, um eine Durchschnittsleistung zu erhalten,
V. Bestimmen einer Leistungsdifferenz für jeden Phasenleiter (2a, 2b, 2c) mithilfe der Steuerungseinheit (10), indem die Durchschnittsleistung von der Leistung des Verbrauchsstroms (P1a, P1b, P1c) beziehungsweise des Einspeisestroms (P2a, P2b, P2c) subtrahiert wird,
VI. falls jede der Leistungsdifferenzen in einem vorbestimmten Toleranzintervall liegt, Wiederholen des Verfahrens ab Schritt I.;
VII. falls mindestens eine der Leistungsdifferenzen außerhalb des Toleranzintervalls liegt,
VIII. falls ein dreiphasiger Einspeisestrom in das Verteilnetz eingespeist wird:
a) für die Phase oder die Phasen (2a, 2b, 2c), deren Differenz positiv ist, Entnehmen eines Differenzstroms, dessen Leistung der Differenz entspricht, mithilfe des ersten AC/DC-Umrichters aus dem jeweiligen Phasenleiter (2a, 2b, 2c) und Umwandeln des Differenzstroms mithilfe des ersten AC/DC-Umrichters (5) in einen ersten Gleichstrom;
b) falls eine einzige unter den Differenzen negativ ist, Umwandeln des ersten Gleichstroms mithilfe des zweiten DC/AC-Umrichters (6) in Wechselstrom und Anlegen dieses Wechselstroms an den Phasenleiter (2a, 2b, 2c), dessen Differenz negativ ist;
c) falls zwei unter den Differenzen negativ sind, erste negative Differenz und zweite negative Differenz genannt,
i. Bestimmen einer negativen Gesamtdifferenz mithilfe der Steuerungseinheit (10), indem die erste negative Differenz zur zweiten negativen Differenz addiert wird,
ii. Dividieren der ersten negativen Differenz mithilfe der Steuerungseinheit (10) durch die negative Gesamtdifferenz, um ein erstes Anlegeverhältnis zu erhalten,
iii. Dividieren der zweiten negativen Differenz mithilfe der Steuerungseinheit (10) durch die negative Gesamtdifferenz, um ein zweites Anlegeverhältnis zu erhalten,
iv. Umwandeln eines ersten Anteils des ersten Gleichstroms, der dem ersten Anlegeverhältnis entspricht, mithilfe des zweiten DC/AC-Umrichters (6) in einen Wechselstrom und dessen Anlegen an den Phasenleiter (2a, 2b, 2c), welcher der ersten negativen Differenz entspricht;
v. Umwandeln eines zweiten Anteils des ersten Gleichstroms, der dem zweiten Anlegeverhältnis entspricht, mithilfe des zweiten DC/AC-Umrichters (6) in einen Wechselstrom und dessen Anlegen auf den Phasenleiter (2a, 2b, 2c), welcher der zweiten negativen Differenz entspricht,
IX. falls ein dreiphasiger Verbrauchsstrom aus dem Verteilnetz entnommen wird:
a') für die Phase oder die Phasen, deren Differenz negativ ist, Entnehmen eines Differenzstroms, dessen Leistung der Differenz entspricht, mithilfe des ersten AC/DC-Umrichters (5) aus dem jeweiligen Phasenleiter (2a, 2b, 2c) und Umwandeln des Differenzstroms mithilfe des ersten AC/DC-Umrichters (5) in einen ersten Gleichstrom;
b') falls eine einzige unter den Differenzen positiv ist, Umwandeln des ersten Gleichstroms mithilfe des zweiten DC/AC-Umrichters (6) in Wechselstrom und Anlegen dieses Wechselstroms an den Phasenleiter (2a, 2b, 2c), dessen Differenz positiv ist;
c') falls zwei unter den Differenzen positiv sind, erste positive Differenz und zweite positive Differenz genannt,
i'. Bestimmen einer positiven Gesamtdifferenz mithilfe der Steuerungseinheit (10), indem die erste positive Differenz zur zweiten positiven Differenz addiert wird,
ii'. Dividieren der ersten positiven Differenz mithilfe der Steuerungseinheit (10) durch die positive Gesamtdifferenz, um ein erstes Anlegeverhältnis zu erhalten,
iii'. Dividieren der zweiten positiven Differenz mithilfe der Steuerungseinheit durch die positive Gesamtdifferenz, um ein zweites Anlegeverhältnis zu erhalten,
iv'. Umwandeln eines ersten Anteils des ersten Gleichstroms, der dem ersten Anlegeverhältnis entspricht, mithilfe des zweiten DC/AC-Umrichters (6) in einen Wechselstrom und dessen Anlegen an den Phasenleiter (2a, 2b, 2c), welcher der ersten positiven Differenz entspricht;
v'. Umwandeln eines zweiten Anteils des ersten Gleichstroms, der dem zweiten Anlegeverhältnis entspricht, mithilfe des zweiten DC/AC-Umrichters (6) in einen Wechselstrom und dessen Anlegen an den Phasenleiter (2a, 2b, 2c), welcher der zweiten positiven Differenz entspricht.

2. Symmetrierungsverfahren nach Anspruch 1, **dadurch gekennzeichnet, dass** das Haushaltsnetz (1) ferner ein Energiespeichermittel (14) umfasst, das mit den Gleichstromklemmen (8) des ersten AC/DC-Umrichters (5) und mit den Gleichstromklemmen (9) des zweiten DC/AC-Umrichters (6) verbunden ist, wobei das Verfahren **dadurch gekennzeichnet ist, dass** es vor dem Schritt I. ferner die folgenden aufeinander folgenden Schritte umfasst:
A) für jeden der Phasenleiter Messen der Stromstärke des Verbrauchsstroms (I1a, I1b, I1c) oder des Einspeisestroms (I2a, I2b, I2c) mithilfe der Strommessfühler (11, 12, 13);
B) Bestimmen der Leistung des Verbrauchsstroms oder des Einspeisestroms für jeden der Phasenleiter mithilfe der Steuerungseinheit (10),
C) Bestimmen der Summe der Leistungen (P1a, P1b, P1c; P2a, P2b, P2c) des Verbrauchsstroms oder des Einspeisestroms der drei Phasen (2a, 2b, 2c) mithilfe der Steuerungseinheit (10),
D) Dividieren der Summe der Leistungen (P1a, P1b, P1c; P2a, P2b, P2c) mithilfe der Steuerungseinheit (10) durch drei, um eine Durchschnittsleistung zu erhalten,
E) Bestimmen einer Leistungsdifferenz für jede der Phasen (2a, 2b, 2c) mithilfe der Steuerungseinheit (10), indem die Durchschnittsleistung von der Leistung des Verbrauchsstroms (P1a, P1b, P1c) beziehungsweise des Einspeisestroms (P2a, P2b, P2c) subtrahiert wird,
F) falls mindestens eine der Leistungsdifferenzen außerhalb des Toleranzintervalls liegt, falls ein dreiphasiger Verbrauchsstrom aus dem Verteilnetz entnommen wird und falls ein Ladezustand des Speichermittels (14) geringer als 100 % ist:
F') für die Phase oder die Phasen (2a, 2b, 2c), deren Differenz negativ ist, Entnehmen eines Differenzstroms, dessen Leistung der Differenz entspricht, mithilfe des ersten AC/DC-Umrichters (5) aus dem jeweiligen Phasenleiter (2a, 2b, 2c),
F") Umwandeln des Differenzstroms mithilfe des ersten AC/DC-Umrichters (5) in einen ersten Gleichstrom und
F''') Speisen des Speichermittels (14) mit Energie, um es zu laden, und/oder
G) falls mindestens eine der Leistungsdifferenzen außerhalb des Toleranzintervalls liegt, falls ein dreiphasiger Verbrauchsstrom aus dem Verteilnetz entnommen wird und falls ein Ladezustand des Speichermittels (14) größer als 0 ist:
G') für den oder die Phasenleiter (2a, 2b, 2c), dessen beziehungsweise deren Differenz positiv ist, Entnehmen eines zweiten Gleichstroms, dessen Leistung der Differenz entspricht, aus dem Speichermittel (14),
G") Anlegen eines Differenzstroms, der erhalten wird, indem der zweite Gleichstrom mithilfe des zweiten DC/AC-Umrichters umgerichtet wird, an den jeweiligen Phasenleiter (2a, 2b, 2c) und/oder
H) falls mindestens eine der Leistungsdifferenzen außerhalb des Toleranzintervalls liegt, falls ein dreiphasiger Einspeisestrom in das Verteilnetz eingespeist wird und falls ein Ladezustand des Speichermittels (14) geringer als 100 % ist:
H') für die Phase oder die Phasen (2a, 2b, 2c), deren Differenz positiv ist, Entnehmen eines Differenzstroms, dessen Leistung der Differenz entspricht, mithilfe des ersten AC/DC-Umrichters (5) aus dem jeweiligen Phasenleiter (2a, 2b, 2c),
H") Umwandeln des Differenzstroms mithilfe des ersten AC/DC-Umrichters (5) in einen ersten Gleichstrom und H"') Speisen des Speichermittels (14) mit Energie, um es zu laden, und/oder
J) falls mindestens eine der Leistungsdifferenzen außerhalb des Toleranzintervalls liegt, falls ein dreiphasiger Einspeisestrom in das Verteilnetz eingespeist wird und falls ein Ladezustand des Speichermittels (14) größer als 0 ist:
J') für den oder die Phasenleiter (2a, 2b, 2c), dessen beziehungsweise deren Differenz negativ ist, Entnehmen eines zweiten Gleichstroms, dessen Leistung der Differenz entspricht, aus dem Speichermittel (14),
J") Anlegen eines Differenzstroms, der erhalten wird, indem der zweite Gleichstrom mithilfe des zweiten DC/AC-Umrichters umgerichtet wird, an den jeweiligen Phasenleiter (2a, 2b, 2c).

3. Symmetrierungsverfahren nach Anspruch 1, **dadurch gekennzeichnet, dass** das Haushaltsnetz (1) ferner ein Energiespeichermittel (14) umfasst, das mit den Gleichstromklemmen (8) des ersten AC/DC-Umrichters (5) und mit den Gleichstromklemmen (9) des zweiten DC/AC-Umrichters (6) verbunden ist, wobei das Verfahren **dadurch gekennzeichnet ist, dass** es vor dem Schritt I. ferner die folgenden aufeinander folgenden Schritte umfasst:
A1) für jeden der Phasenleiter (2a, 2b, 2c) Messen der Stromstärke des Verbrauchsstroms (I1a, I1b, I1c) oder des Einspeisestroms (I2a, I2b, I2c) mithilfe der Strommessfühler (11, 12, 13);
B1) Bestimmen der Leistung des Verbrauchsstroms (P1a, P1b, P1c) oder des Einspeisestroms (P2a, P2b, P2c) für jeden der Phasenleiter (2a, 2b, 2c) mithilfe der Steuerungseinheit (10),
C1) Bestimmen der Summe der Leistungen (P1a, P1b, P1c; P2a, P2b, P2c) des Verbrauchsstroms oder des Einspeisestroms der drei Phasen (2a, 2b, 2c) mithilfe der Steuerungseinheit (10),
D1) Dividieren der Summe der Leistungen (P1a, P1b, P1c; P2a, P2b, P2c) mithilfe der Steuerungseinheit (10) durch drei, um eine Durchschnittsleistung zu erhalten,
E1) Bestimmen einer Leistungsdifferenz für jede der Phasen (2a, 2b, 2c) mithilfe der Steuerungseinheit (10), indem die Durchschnittsleistung von der Leistung des Verbrauchsstroms (P1a, P1b, P1c) beziehungsweise des Einspeisestroms (P2a, P2b, P2c) subtrahiert wird,
F1) falls mindestens eine der Leistungsdifferenzen außerhalb des Toleranzintervalls liegt, falls ein dreiphasiger Verbrauchsstrom aus dem Verteilnetz entnommen wird und falls ein Ladezustand des Speichermittels (14) geringer als 100 % ist:
F1') für die Phase (2a, 2b, 2c), deren Leistung des Verbrauchsstroms (P1a, P1b, P1c) die geringste ist, Entnehmen eines Differenzstroms, dessen Leistung der Leistungsdifferenz der jeweiligen Phase (2a, 2b, 2c) entspricht, mithilfe des ersten AC/DC-Umrichters (5) aus dem jeweiligen Phasenleiter (2a, 2b, 2c),
F1") Umwandeln des Differenzstroms mithilfe des ersten AC/DC-Umrichters (5) in einen ersten Gleichstrom und F1"') Speisen des Speichermittels (14) mit Energie, um es zu laden, und/oder
G1) falls mindestens eine der Leistungsdifferenzen außerhalb des Toleranzintervalls liegt, falls ein dreiphasiger Verbrauchsstrom aus dem Verteilnetz entnommen wird und falls ein Ladezustand des Speichermittels (14) größer als 0 ist:
G1') für den oder die Phasenleiter (2a, 2b, 2c), dessen beziehungsweise deren Differenz des Verbrauchsstroms (P1a, P1b, P1c) die höchste ist, Entnehmen eines zweiten Gleichstroms, dessen Leistung der Leistungsdifferenz entspricht, aus dem Speichermittel (14),
G1") Anlegen eines Differenzstroms, der erhalten wird, indem der zweite Gleichstrom mithilfe des zweiten DC/AC-Umrichters umgerichtet wird, an den jeweiligen Phasenleiter (2a, 2b, 2c) und/oder
H1) falls mindestens eine der Leistungsdifferenzen außerhalb des Toleranzintervalls liegt, falls ein dreiphasiger Einspeisestrom in das Verteilnetz eingespeist wird und falls ein Ladezustand des Speichermittels (14) geringer als 100 % ist:
H1') für die Phase (2a, 2b, 2c), deren Leistung des Einspeisestroms (P2a, P2b, P2c) die höchste ist, Entnehmen eines Differenzstroms, dessen Leistung der Leistungsdifferenz der jeweiligen Phase (2a, 2b, 2c) entspricht, mithilfe des ersten AC/DC-Umrichters (5) aus dem jeweiligen Phasenleiter (2a, 2b, 2c),
H1") Umwandeln des Differenzstroms mithilfe des ersten AC/DC-Umrichters (5) in einen ersten Gleichstrom und
H1"') Speisen des Speichermittels (14) mit Energie, um es zu laden, und/oder
J1) falls mindestens eine der Leistungsdifferenzen außerhalb des Toleranzintervalls liegt, falls ein dreiphasiger Einspeisestrom in das Verteilnetz eingespeist wird und falls ein Ladezustand des Speichermittels (14) größer als 0 ist:
J1') für den oder die Phasenleiter (2a, 2b, 2c), dessen beziehungsweise deren Leistung des Einspeisestroms (P2a, P2b, P2c) die geringe ist, Entnehmen eines zweiten Gleichstroms, dessen Leistung der Leistungsdifferenz entspricht, aus dem Speichermittel (14),
J1") Anlegen eines Differenzstroms, der erhalten wird, indem der zweite Gleichstrom mithilfe des zweiten DC/AC-Umrichters umgerichtet wird, an den jeweiligen Phasenleiter (2a, 2b, 2c).

4. Symmetrierungsverfahren nach einem der Ansprüche 1 bis 3, **dadurch gekennzeichnet, dass** das Toleranzintervall die Werte umfasst, die sich zwischen einem ersten Wert, welcher der Durchschnittsleistung multipliziert mit -0,1 entspricht, und einem zweiten Wert, welcher der Durchschnittsleistung multipliziert mit 0,1 entspricht, befinden.

5. Symmetrierungsverfahren nach einem der Ansprüche 2 oder 3, **dadurch gekennzeichnet, dass** im Schritt II. und/oder im Schritt B) und/oder im Schritt B1) die Leistung des Verbrauchsstroms (P1a, P1b, P1c) oder des Einspeisestroms (P2a, P2b, P2c) für jede Phase (2a, 2b, 2c) bestimmt wird, indem die im Schritt I. erhaltene Stromstärke des Verbrauchsstroms (I1a, I1b, I1c) oder des Einspeisestroms (I2a, I2b, I2c) mithilfe der Steuerungseinheit (10) mit der Nennspannung des Verteilnetzes und/oder des Haushaltsnetzes multipliziert wird.

6. Symmetrierungsverfahren nach einem der Ansprüche 2 oder 3, **dadurch gekennzeichnet, dass** die Phasensymmetrierungsvorrichtung ferner mindestens drei Spannungsmessfühler umfasst, wobei jeder der Spannungsmessfühler mit der Steuerungseinheit (10) und mit einem unter den mindestens drei Phasenleitern (2a, 2b, 2c) verbunden ist, wobei jeder der Spannungsmessfühler geeignet ist, eine Spannung des Verbrauchsstroms oder des Einspeisestroms für einen der drei Phasenleiter zu messen, wobei das Verfahren **dadurch gekennzeichnet ist, dass** im Schritt II. und/oder im Schritt B) und/oder im Schritt B1) die Leistung des Verbrauchsstroms (P1a, P1b, P1c) oder des Einspeisestroms (P2a, P2b, P2c) für jeden Phasenleiter (2a, 2b, 2c) bestimmt wird, indem mithilfe der Spannungsmessfühler die Spannung des Verbrauchsstroms oder des Einspeisestroms für jeden der Phasenleiter (2a, 2b, 2c) gemessen wird und indem diese jeweils für jeden Phasenleiter mit der im Schritt I. erhaltenen Stromstärke des Verbrauchsstroms (I1a, I1b, I1c) oder des Einspeisestroms (I2a, I2b, I2c) multipliziert wird.

7. Vorrichtung zur Symmetrierung eines dreiphasigen Wechselstroms zur Ausführung des Verfahrens nach einem der Ansprüche 1 bis 6, umfassend einen ersten AC/DC-Umrichter (5) und einen zweiten DC/AC-Umrichter (6), die über ihre Gleichstromklemmen (8, 9) verbunden sind, wobei die Phasensymmetrierungsvorrichtung ferner eine Steuerungseinheit (10) und mindestens drei Strommessfühler (11, 12, 13) umfasst, wobei jeder der Strommessfühler (11, 12, 13) mit der Steuerungseinheit (10) verbunden ist und geeignet ist, mit einem unter mindestens drei Phasenleitern (2a, 2b, 2c) verbunden zu werden, wobei jeder der Strommessfühler (11, 12, 13) geeignet ist, die Stärke des Verbrauchsstroms oder des Einspeisestroms zu messen, der in einem unter den drei Phasenleitern übertragen wird.

8. Symmetrierungsvorrichtung nach Anspruch 7, **dadurch gekennzeichnet, dass** sie ferner mindestens drei Spannungsmessfühler umfasst, wobei jeder der Spannungsmessfühler mit der Steuerungseinheit (10) verbunden ist und geeignet ist, mit einem unter den mindestens drei Phasenleitern (2a, 2b, 2c) verbunden zu werden, und geeignet ist, eine Spannung des Verbrauchsstroms oder des Einspeisestroms zu messen, der in einem unter den drei Phasenleitern (2a, 2b, 2c) übertragen wird, wobei die Symmetrierungsvorrichtung zum Ausführen des Verfahrens nach einem der Ansprüche 3 bis 6 geeignet ist.

## Claims

1. Method for balancing phases of a three-phase consumption current drawn from a distribution network and consumed by at least one consumer installed in a domestic network (1) or of a three-phase injection current injected into the distribution network and produced by at least one power generating device installed in the domestic network (1), said consumption current and/or said injection current being conveyed by an electric line (2) comprising at least three phase conductors (2a, 2b, 2c), the balancing method being implemented using a phase-balancing device comprising an AC/DC first converter (5) and a DC/AC second converter (6) that are connected via their DC terminals (8,9), said phase-balancing device furthermore comprising a control unit (10) and at least three sensors (11, 12, 13) for measuring current, each of said sensors for measuring current being connected to the control unit (10) and to one among the at least three phase conductors (2a, 2b, 2c), each of said sensors (11, 12, 13) for measuring current being able to measure the magnitude (I1a, I1b, I1c) of the consumption current or the magnitude (I2a, I2b, I2c) of the injection current in one of said at least three phase conductors (2a, 2b, 2c), this method being **characterized in that** it comprises the following successive steps:
I. for each of the phases (2a, 2b, 2c), measuring, using the sensors (11, 12, 13) for measuring current, the magnitude (I1a, I1b, I1c) of the consumption current or the magnitude (I2a, I2b, I2c) of the injection current,
II. determining, using the control unit (10), for each of the phase conductors (2a, 2b, 2c), the power (P1a, P1b, P1c) of the consumption current or the power (P2a, P2b, P2c) of the injection current,
III. determining, using the control unit (10), the sum of the powers (P1a, P1b, P1c; P2a, P2b, P2c) of the consumption current or of the injection current of the three phases (2a, 2b, 2c),
IV. dividing, using the control unit (10), the sum of the powers (P1a, P1b, P1c; P2a, P2b, P2c) by three in order to obtain an average power,
V. determining, using the control unit (10), for each of the phases (2a, 2b, 2c), a power difference by subtracting the average power from the respective power (P1a, P1b, P1c) of the consumption current or from the respective power (P2a, P2b, P2c) of the injection current,
VI. in the case where each of said power differences falls within a preset tolerance interval, reiterating said method from step I.;
VII. in the case where at least one of said power differences falls outside of the tolerance interval,
VIII. in the case where a three-phase injection current is injected into the distribution grid:
a) for the one or more phases (2a, 2b, 2c) the difference of which is positive, drawing, from the respective phase conductor (2a, 2b, 2c), a differential current the power of which corresponds to said difference using the AC/DC first converter and converting said differential current using the AC/DC first converter (5) into a first DC current;
b) in the case where only one among said differences is negative, converting the first DC current into an AC current using the DC/AC second converter (6) and applying this AC current to the phase conductor (2a, 2b, 2c) said difference of which is negative;
c) in the case where two among said differences are negative, these differences being called the first negative difference and the second negative difference,
i. determining, using the control unit (10), a total negative difference by adding the first negative difference to the second negative difference,
ii. dividing, using the control unit (10), the first negative difference by the total negative difference to obtain a first application rate,
iii. dividing, using the control unit (10), the second negative difference by the total negative difference to obtain a second application rate,
iv. converting a first part of the first DC current corresponding to the first application rate into an AC current using the DC/AC second converter (6) and applying this current to the phase conductor (2a, 2b, 2c) corresponding to the first negative difference;
v. converting a second part of the first DC current corresponding to the second application rate into an AC current using the DC/AC second converter (6) and applying this current to the phase conductor (2a, 2b, 2c) corresponding to the second negative difference,
IX. in the case where a three-phase consumption current is drawn from the distribution network:
a') for the one or more phases the difference of which is negative, drawing, from the respective phase conductor (2a, 2b, 2c), a differential current the power of which corresponds to said difference using the AC/DC first converter (5) and converting said differential current using the AC/DC first converter (5) into a first DC current;
b') in the case where only one among said differences is positive, converting the first DC current into an AC current using the DC/AC second converter (6) and applying this AC current to the phase conductor (2a, 2b, 2c) said difference of which is positive;
c') in the case where two among said differences are positive, these differences being called the first positive difference and the second positive difference,
i'. determining, using the control unit (10), a total positive difference by adding the first positive difference to the second positive difference,
ii'. dividing, using the control unit (10), the first positive difference by the total positive difference to obtain a first application rate,
iii'. dividing, using the control unit, the second positive difference by the total positive difference to obtain a second application rate,
iv'. converting a first part of the first DC current corresponding to the first application rate into an AC current using the DC/AC second converter (6) and applying this current to the phase conductor (2a, 2b, 2c) corresponding to the first positive difference;
v'. converting a second part of the first DC current corresponding to the second application rate into an AC current using the DC/AC second converter (6) and applying this current to the phase conductor (2a, 2b, 2c) corresponding to the second positive difference.

2. Balancing method according to Claim 1, **characterized in that** the domestic network (1) furthermore comprises a means (14) for storing energy connected to the DC terminals (8) of the AC/DC first converter (5) and to the DC terminals (9) of the DC/AC second converter (6), this method being **characterized in that** it furthermore comprises, before step I., the following successive steps:
A) for each of the phase conductors, measuring, using the sensors (11, 12, 13) for measuring current, the magnitude (I1a, I1b, I1c) of the consumption current or the magnitude (I2a, I2b, I2c) of the injection current;
B) determining, using the control unit (10), for each of the phase conductors, the power of the consumption current or of the injection current
C) determining, using the control unit (10), the sum of the powers (P1a, P1b, P1c; P2a, P2b, P2c) of the consumption current or of the injection current of the three phases (2a, 2b, 2c),
D) dividing, using the control unit (10), the sum of the powers (P1a, P1b, P1c; P2a, P2b, P2c) by three in order to obtain an average power,
E) determining, using the control unit (10), for each of the phases (2a, 2b, 2c), a power difference by subtracting the average power from the respective power (P1a, P1b, P1c) of the consumption current or from the respective power (P2a, P2b, P2c) of the injection current,
F) in the case where at least one of said power differences falls outside of the tolerance interval, in the case where a three-phase consumption current is drawn from the distribution network and in the case where a state of charge of the storing means (14) is lower than 100%:
F') for the one or more phases (2a, 2b, 2c) the difference of which is negative, drawing, from the respective phase conductor (2a, 2b, 2c), a differential current the power of which corresponds to said difference using the AC/DC first converter (5),
F") converting said differential current using the AC/DC first converter (5) into a first DC current; and
F"') supplying the storing means (14) with energy in order to charge it, and/or
G) in the case where at least one of said power differences falls outside of the tolerance interval, in the case where a three-phase consumption current is drawn from the distribution network and in the case where a state of charge of the storing means (14) is higher than 0:
G') for the one or more phase conductors (2a, 2b, 2c) the difference of which is positive, drawing, from the storing means (14), a second DC current the power of which corresponds to said difference,
G") applying, to the respective phase conductor (2a, 2b, 2c), a differential current obtained by converting the second DC current using the DC/AC second converter, and/or
H) in the case where at least one of said power differences falls outside of the tolerance interval, in the case where a three-phase injection current is injected into the distribution network, and in the case where a state of charge of the storing means (14) is lower than 100%:
H') for the one or more phases (2a, 2b, 2c) the difference of which is positive, drawing, from the respective phase conductor (2a, 2b, 2c), a differential current the power of which corresponds to said difference using the AC/DC first converter (5),
H") converting said differential current using the AC/DC first converter (5) into a first DC current; and
H"') supplying the storing means (14) with energy in order to charge it, and/or
J) in the case where at least one of said power differences falls outside of the tolerance interval, in the case where a three-phase injection current is injected into the distribution network and in the case where a state of charge of the storing means (14) is higher than 0:
J') for the one or more phase conductors (2a, 2b, 2c) the difference of which is negative, drawing, from the storing means (14), a second DC current the power of which corresponds to said difference,
J") applying, to the respective phase conductor (2a, 2b, 2c), a differential current obtained by converting the second DC current using the DC/AC second converter.

3. Balancing method according to Claim 1, **characterized in that** the domestic network (1) furthermore comprises a means (14) for storing energy connected to the DC terminals (8) of the AC/DC first converter (5) and to the DC terminals (9) of the DC/AC second converter (6), this method being **characterized in that** it furthermore comprises, before step I., the following successive steps:
A1) for each of the phase conductors (2a, 2b, 2c), measuring, using the sensors (11, 12, 13) for measuring current, the magnitude (I1a, I1b, I1c) of the consumption current or the magnitude (I2a, I2b, I2c) of the injection current;
B1) determining, using the control unit (10), for each of the phase conductors (2a, 2b, 2c), the power (P1a, P1b, P1c) of the consumption current or the power (P2a, P2b, P2c) of the injection current
C1) determining, using the control unit (10), the sum of the powers (P1a, P1b, P1c; P2a, P2b, P2c) of the consumption current or of the injection current of the three phases (2a, 2b, 2c),
D1) dividing, using the control unit (10), the sum of the powers (P1a, P1b, P1c; P2a, P2b, P2c) by three in order to obtain an average power,
E1) determining, using the control unit (10), for each of the phases (2a, 2b, 2c), a power difference by subtracting the average power from the respective power (P1a, P1b, P1c) of the consumption current or from the respective power (P2a, P2b, P2c) of the injection current,
F1) in the case where at least one of said power differences falls outside of the tolerance interval, in the case where a three-phase consumption current is drawn from the distribution network and in the case where a state of charge of the storing means (14) is lower than 100%,
F1') for the phase (2a, 2b, 2c) the power (P1a, P1b, P1c) of the consumption current of which is lowest, drawing, from the respective phase conductor (2a, 2b, 2c), a differential current the power of which corresponds to said power difference of the respective phase (2a, 2b, 2c) using the AC/DC first converter (5),
F1") converting said differential current using the AC/DC first converter (5) into a first DC current; and
F1"') supplying the storing means (14) with energy in order to charge it, and/or
G1) in the case where at least one of said power differences falls outside of the tolerance interval, in the case where a three-phase consumption current is drawn from the distribution network and in the case where a state of charge of the storing means (14) is higher than 0,
G1') for the one or more phase conductors (2a, 2b, 2c) the power (P1a, P1b, P1c) of the consumption current of which is highest, drawing, from the storing means (14), a second DC current the power of which corresponds to said power difference,
G1") applying, to the respective phase conductor (2a, 2b, 2c), a differential current obtained by converting the second DC current using the DC/AC second converter, and/or
H1) in the case where at least one of said power differences falls outside of the tolerance interval, in the case where a three-phase injection current is injected into the distribution network, and in the case where a state of charge of the storing means (14) is lower than 100%,
H1') for the phase (2a, 2b, 2c) the power (P2a, P2b, P2c) of the injection current of which is highest, drawing, from the respective phase conductor (2a, 2b, 2c), a differential current the power of which corresponds to said power difference of the respective phase (2a, 2b, 2c) using the AC/DC first converter (5),
H1") converting said differential current using the AC/DC first converter (5) into a first DC current; and
H1'") supplying the storing means (14) with energy in order to charge it, and/or
J1) in the case where at least one of said power differences falls outside of the tolerance interval, in the case where a three-phase injection current is injected into the distribution network and in the case where a state of charge of the storing means (14) is higher than 0,
J1') for the one or more phase conductors (2a, 2b, 2c) the power (P2a, P2b, P2c) of the injection current of which is lowest, drawing, from the storing means (14), a second DC current the power of which corresponds to said power difference,
J1") applying, to the respective phase conductor (2a, 2b, 2c), a differential current obtained by converting the second DC current using the DC/AC second converter.

4. Balancing method according to any one of Claims 1 to 3, **characterized in that** the tolerance interval comprises the values lying between a first value corresponding to the average power multiplied by -0.1 and a second value corresponding to the average power multiplied by 0.1.

5. Balancing method according to either one of Claims 2 and 3, **characterized in that**, in step II. and/or in step B) and/or in step B1), the power (P1a, P1b, P1c) of the consumption current or the power (P2a, P2b, P2c) of the injection current for each phase (2a, 2b, 2c) is determined by multiplying, using the control unit (10), the magnitude (I1a, I1b, I1c) of the consumption current or the magnitude (I2a, I2b, I2c) of the injection current obtained in step I. by the nominal voltage of the distribution network and/or of the domestic network.

6. Balancing method according to either one of Claims 2 and 3, **characterized in that** the phase-balancing device furthermore comprises at least three sensors for measuring voltage, each of said sensors for measuring voltage being connected to the control unit (10) and to one among the at least three phase conductors (2a, 2b, 2c), each of said sensors for measuring voltage being able to measure a voltage of the consumption current or of the injection current for one of the three phase conductors, this method being **characterized in that**, in step II. and/or in step B) and/or in step B1), the power (P1a, P1b, P1c) of the consumption current or the power (P2a, P2b, P2c) of the injection current for each phase conductor (2a, 2b, 2c) is determined by measuring, using the sensors for measuring voltage, the voltage of the consumption current or of the injection current for each of the phase conductors (2a, 2b, 2c) and by respectively multiplying these measured voltages, for each phase conductor, by the magnitude (I1a, I1b, I1c) of the consumption current or by the magnitude (I2a, I2b, I2c) of the injection current (I2a, I2b, I2c) obtained in step I.

7. Device for balancing a three-phase AC current for implementing the method according to any one of Claims 1 to 6, comprising an AC/DC first converter (5) and a DC/AC second converter (6) that are connected via their DC terminals (8,9), said phase-balancing device furthermore comprising a control unit (10) and at least three sensors (11, 12, 13) for measuring current, each of said sensors (11, 12, 13) for measuring current being connected to the control unit (10) and being able to be connected to one among the at least three phase conductors (2a, 2b, 2c), each of said sensors (11, 12, 13) for measuring current being able to measure the magnitude of the consumption current or of the injection current being conveyed in one among the three phase conductors.

8. Balancing device according to Claim 7, **characterized in that** it furthermore comprises at least three sensors for measuring voltage, each of said sensors for measuring voltage being connected to the control unit (10) and being able to be connected to one among the at least three phase conductors (2a, 2b, 2c) and being able to measure a voltage of the consumption current or of the injection current being conveyed in one among the three phase conductors (2a, 2b, 2c), said balancing device being able to implement the method according to any one of Claims 3 to 6.
